# EUROPEAN PATENT APPLICATION

(11) **EP 2 757 043 A1**
(43) Date of publication of application: **23.07.2014**
(21) Application number: 13178474.6
(22) Date of filing: 30.07.2013
(51) Int. Cl.: B65B 5/10, B65B 5/12, B65G 47/14

(54) **"Device for gripping and transferring individual products"**

(30) Priority: 22.01.2013 IT TO20130052
(71) Applicant: Cavanna S.p.A., 28077 Prato Sesia (NO) (IT)
(72) Inventor: Brolli, Elio, I-28077 Prato Sesia (Novara) (IT); Parino, Dario, I-28077 Prato Sesia (Novara) (IT)
(74) Representative: Marchitelli, Mauro

(57) **Abstract**

Device for gripping and transferring individual products (P), comprising:
- a belt (12) on which individual products (P) are randomly arranged,
- a conveyor (14) carrying a plurality of sections (16) for groups of products, and
- a plurality of manipulators (22, 24, 26, 28) programmed to pick up the individual products (P) from the belt (12) and to deposit the products (P) on said sections (16) so as to form ordered groups (G) of products on said sections (16),
wherein said conveyor (14) extends along a closed ring path in a horizontal plane, said closed ring path extending at least partially above said belt 12.

## Description

### Field of the invention

The present invention relates to the packaging of products and refers to a device for gripping and transferring individual products suitable for forming ordered groups of products from a continuous stream wherein different types of individual products are arranged randomly.

### Description of the prior art

In the packaging sector, for example of foodstuffs, it is frequently necessary to form ordered groups of products from a flow of different types of randomly-arranged products. For example, the flow of individual products could be formed from different types of confectionery products which must be packaged into groups with a specific composition of different products.

For this type of application, gripping and transferring devices are used comprising a belt for advancing a continuous flow of randomly-arranged individual products, a conveyor provided with a plurality of sections on which ordered groups of products are arranged, and a plurality of manipulators programmed to pick up the individual products from the belt and to deposit the products on the sections of the conveyor in a predetermined order, so as to form a continuous succession of ordered groups of products on the conveyor.

The document EP-A-0856465 describes a device for gripping and transferring individual products wherein the containers that receive the ordered groups of products move in a counterflow direction with respect to the movement of individual loose products. The conveyor which transports the ordered groups of products moves in a straight direction parallel and opposite with respect to the belt on which the individual loose products are arranged.

A drawback of the known solution from the document EP-A-0856465 consists in the fact that when the belt that transports the individual loose products has a width that is greater than the diameter of the work area of the manipulators it is necessary to have two conveyors for the ordered groups of products located on opposite sides of the belt, which requires two packaging machines, each associated with the respective conveyor of ordered groups of products.

Another drawback of this solution is that the counter-flow arrangement takes the ordered groups of products towards the source area of the individual products. In the case of biscuits or similar bakery products the ordered groups of products to be packaged are transported towards the oven from which the individual loose products emerge. This layout complicates the arrangement of the packaging machines that carry out the packaging of the ordered groups of products.

From a layout point of view it would be preferable for the ordered groups of products to move in the same direction of transport as the individual loose products. However, this arrangement is not stable to the variations in flow rate of the individual loose products given that the manipulators which have the fewest number of individual loose products available are located by zones of the conveyor that have fewer vacant positions for the ordered groups of products.

The document EP-A-2233400 describes a device for gripping and transferring individual products wherein the conveyor for the ordered groups of products moves in concordant flow with respect to the direction of progress of the individual loose products. In this case, to avoid instability problems, buffers are provided on which the manipulators deposit the excess individual products during the instances wherein there are no vacant positions on the conveyor for the ordered groups of products. The manipulators are programmed to pick up the individual products from the buffers and place them in the vacant positions of the conveyor during the instances wherein there are vacant positions available for the ordered groups of products on the conveyor.

A drawback of this solution is that the products that are provisionally arranged on the buffers are collected and deposited twice, which increases the risk of damage to the products, especially in the case of delicate products.

### Object and summary of the invention

The present invention aims to provide a device for gripping and transferring individual products that overcomes the problems of the prior art.

According to the present invention, this object is achieved by a device having the characteristics forming the subject of claim 1.

Preferred characteristics of the present invention are the subject of the dependent claims.

The claims form an integral part of the disclosure provided in relation to the invention.

### Brief description of the drawings

The present invention will now be described in detail with reference to the attached drawings, provided purely by way of non-limiting example, wherein:
- Figure 1 is a perspective view of a first embodiment of a device according to the present invention,
- Figures 2 and 3 are a plan view and a side elevation view, respectively, of the device of Figure 1,
- Figure 4 is a perspective view of a second embodiment of a device according to the present invention, and
- Figures 5 and 6 are a plan view and a side elevation view, respectively, of the device of Figure 4.

### Detailed description of embodiments of the invention

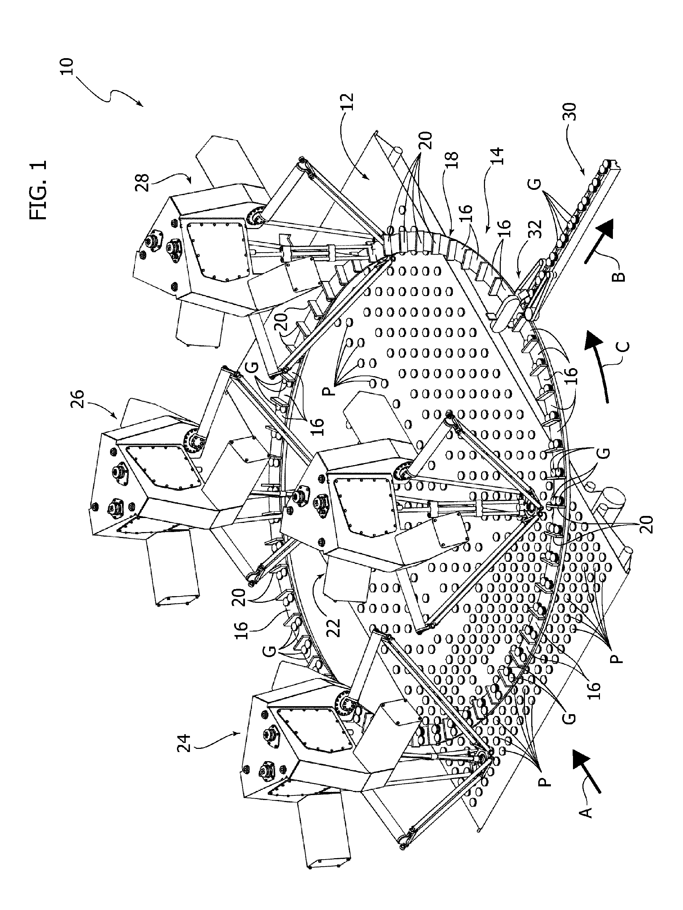

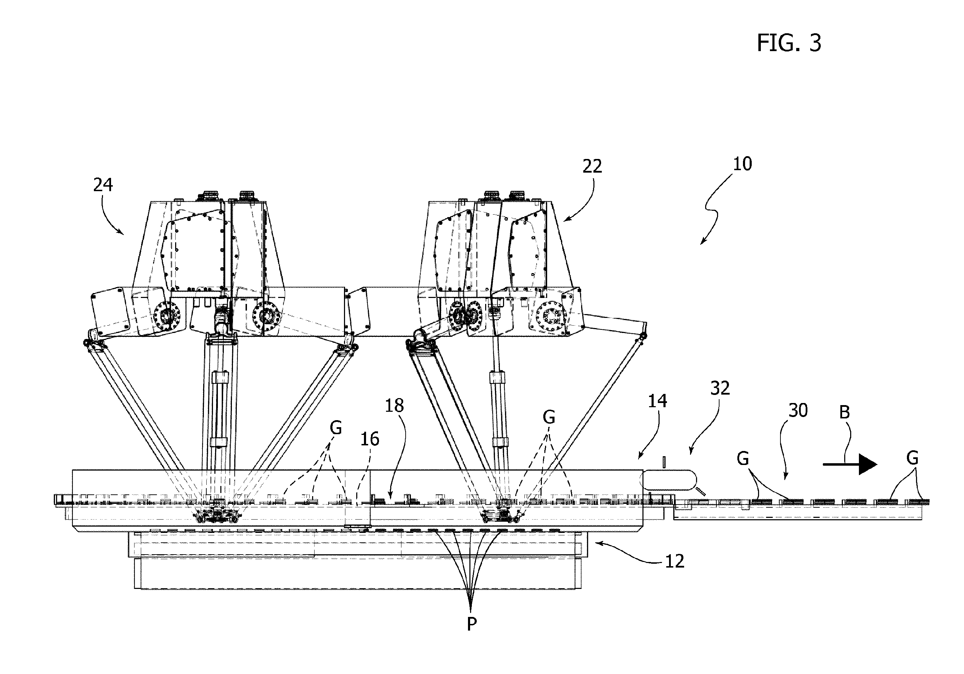

With reference to Figures 1 to 3, numeral 10 indicates a device for gripping and transferring individual products according to the present invention. The device 10 comprises a conveyor belt 12 moving in the direction indicated by the arrow A. Individual loose products P of different types are randomly arranged on the conveyor belt 12.

The device 10 comprises a conveyor 14 having a plurality of sections 16 configured to receive ordered groups G of products.

The conveyor 14 extends along a closed ring path in a horizontal plane. The closed ring path extends at least partially above the belt 12.

In the embodiment illustrated in Figures 1 to 3, the conveyor 14 comprises a ring 18 extending in a horizontal plane and rotatably supported about a vertical axis. The ring 18 is driven into rotation by a motor controlled by the electronic control unit of device 10. The ring 18 is equipped with a plurality of pushers 20, for example in the shape of vertical tabs, that define sectors of ring between them forming the sections 16 configured to receive respective ordered groups G of products. The sections 16 of the conveyor 14 could receive the containers in which the groups of products G are arranged in an orderly way.

The device 10 comprises a plurality of manipulators 22, 24, 26, 28 programmed to pick up individual products P from the belt 12 and to deposit the products P on the sections 16 of the conveyor 14, so as to form ordered groups G of products on the sections 16. The manipulators 22, 24, 26, 28 are associated with vision devices that facilitate recognition of the type of individual products P, for the formation of ordered groups G with a specific composition of different products P.

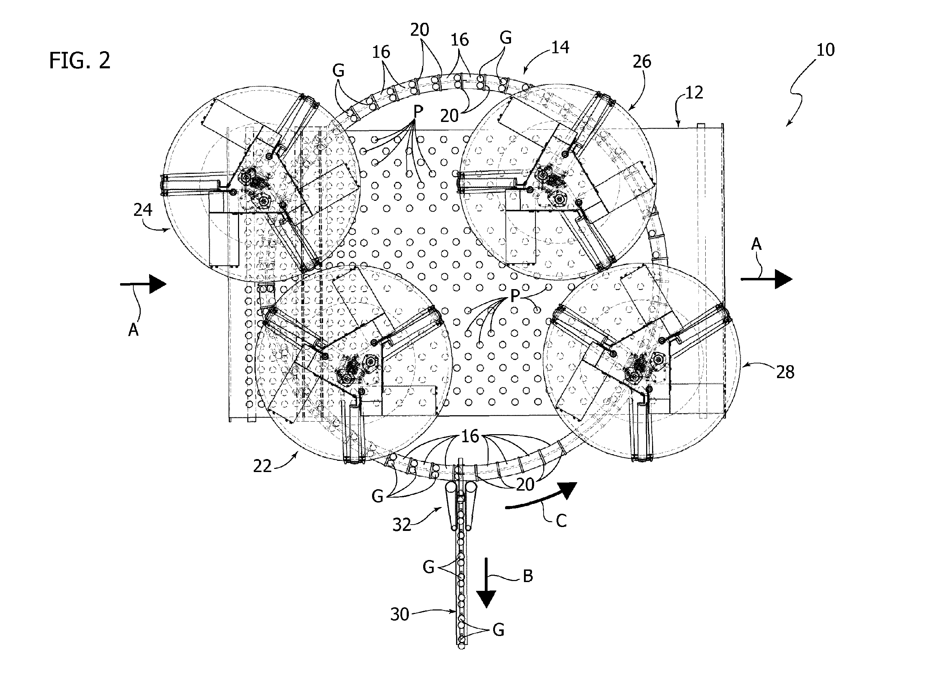

In Figure 2 the work areas with their circumferences of the respective manipulators 22, 24, 26, 28 are indicated. The manipulators 22, 24, 26, 28 are arranged so as to cover the entire width of the belt 12 with their respective work areas. In particular, the manipulators 22, 24 cover the width of the belt 12 in an upstream area and the manipulators 26, 28 cover the width of the belt 12 in a downstream area. All the manipulators 22, 24, 26, 28 are arranged so as to cover a sector of the conveyor 14 with their respective work areas.

The device 10 comprises a second conveyor 30 configured for feeding ordered groups G of products to a packaging machine. The second conveyor 30 is preferably a straight conveyor including, for example, a straight guide and a chain configured to advance the ordered groups G of products. The device 10 also comprises a transfer device 32 which transfers the ordered groups G of products from the sections 16 of the conveyor 14 onto the second conveyor 30. The transfer device 32 can be formed by a chain with a closed ring belt provided with vanes that transfer the ordered groups G of products along a radial direction from the section 16 which in turn is positioned alongside the transfer device 32. On the second conveyor 30 a continuous succession of ordered groups G of products is formed, movable along a straight direction B.

During operation, the conveyor 14 rotates in the direction indicated by the arrow C at a controlled speed as a function of the flow of individual loose products P on the belt 12.

The manipulators 22, 24, 26, 28 pick up the individual products P from the belt 12 and place them on the sections 16 of the conveyor 14 so as to form ordered groups G formed from a predetermined composition and arrangement of individual products P.

As is visible in Figures 1 and 2, the manipulators 26, 28 located further downstream with respect to the advancing direction of the products P have a lower density of individual products P available in their respective work areas but have a greater number of available positions on the sections 16 of the conveyor 14 in their respective work areas for the completion of the ordered groups G.

On the other hand, the manipulators 22, 24 have a reduced availability of vacant positions on the sections 16 of the conveyor 14 in their respective work areas and have a higher density of individual loose products P in their respective work areas.

This arrangement ensures the greatest chance of filling the sections 16 with predetermined combinations of different products P.

The speed of rotation of the conveyor 14 can be decreased during the instances where there is a lower flow of individual products P or increased during the instances where there is an increased flow of individual loose products P. The speed of the second conveyor 30 and the transfer device 32 are coordinated with the speed of rotation of the conveyor 14.

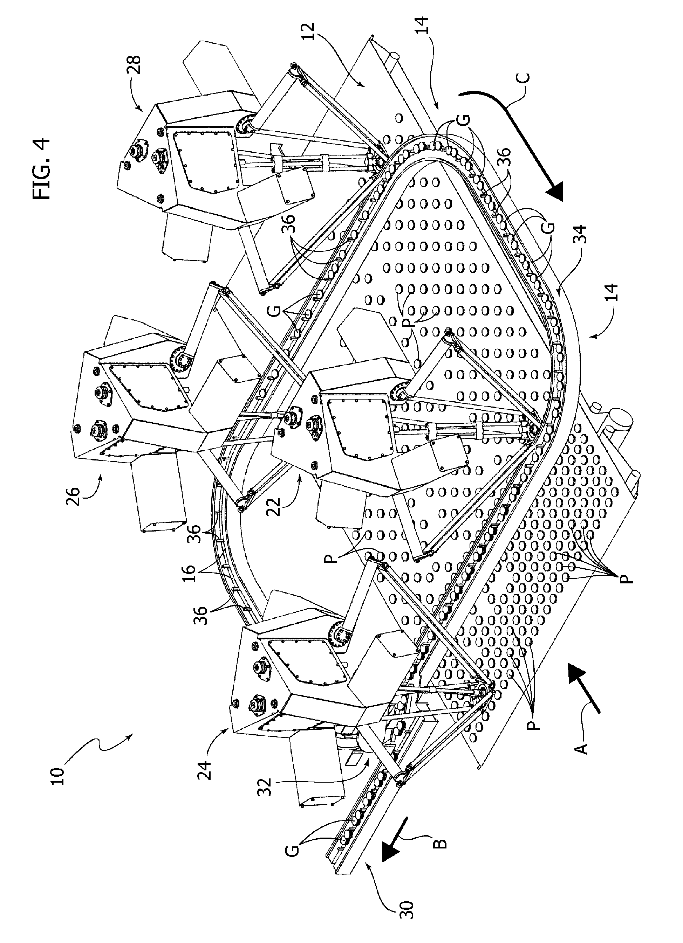

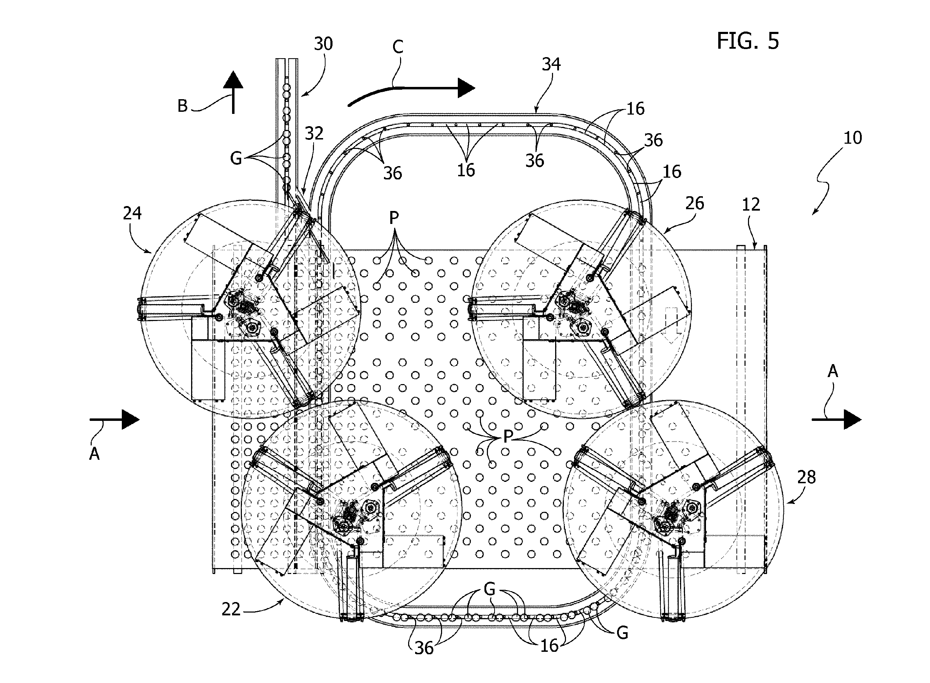

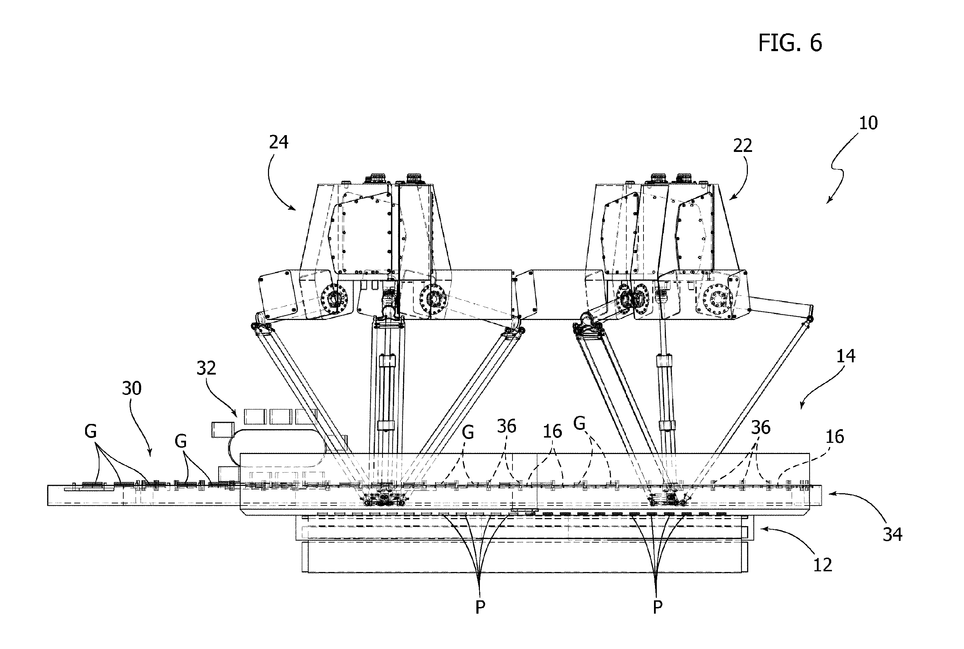

In Figures 4 to 6 a second embodiment of the device according to the present invention is illustrated. The elements corresponding to those previously described are indicated by the same reference numerals. In this second embodiment a conveyor 14 is also envisaged which extends over a closed ring path in a horizontal plane. In this variant, the conveyor 14 comprises a stationary closed ring guide 34 along which a flexible transport element is movable, such as a chain or belt carrying a plurality of vertical pins 36 which push the ordered groups G of products along the guide 34. In this case the conveyor 14 also comprises a plurality of sections 16 for the ordered groups G of products, formed by the guide portions 34 located between the adjacent pushers 36.

In the embodiment of Figure 4 a transfer device 32 may also be provided which transfers the ordered groups G of products onto a second conveyor 30 which extends along a straight direction and feeds a packaging machine with a continuous succession of ordered groups G of products.

Of course, without prejudice to the principle of the invention, the details of construction and the embodiments may vary widely with respect to those described and illustrated without departing from the scope of the invention as defined by the claims that follow.

## Claims

1. Device for gripping and transferring individual products (P), comprising:
- a belt (12) on which individual products (P) are randomly arranged,
- a conveyor (14) carrying a plurality of sections (16) for groups of products, and
- a plurality of manipulators (22, 24, 26, 28) programmed to pick up the individual products (P) from the belt (12) and to deposit the products (P) on said sections (16) so as to form ordered groups (G) of products on said sections (16),
**characterised in that** said conveyor (14) extends along a closed ring path in a horizontal plane, said closed ring path extending at least partially above said belt (12).

2. Device according to claim 1, **characterised in that** it comprises a second conveyor (30) and a transfer device (32) that transfers said ordered groups (G) of products from said sections (16) to said second conveyor (30), so as to form a continuous succession of ordered groups (G) of products on said second conveyor (30).

3. Device according to claim 1 or claim 2, **characterised in that** said conveyor (14) comprises an ring (18) rotatably mounted about a vertical axis and provided with a plurality of sectors defining said sections (16) configured to receive said ordered groups (G) of products.

4. Device according to claim 3, **characterised in that** said ring (18) is provided with a plurality of pushers (20) which extend in the vertical direction and that define between them said sections (16).

5. Device according to claim 1 or claim 2, **characterised in that** said conveyor (14) comprises a stationary guide (34) which extends along a closed ring path and carries a movable flexible element provided with a plurality of pushers (36) that push said ordered groups (G) of products along said path.
